# EUROPÄISCHE PATENTSCHRIFT

(11) **EP 2 963 627 B1**
(45) Veröffentlichungstag und Bekanntmachung des Hinweises auf die Patenterteilung: **18.05.2016**
(21) Anmeldenummer: 14175734.4
(22) Anmeldetag: 04.07.2014
(51) Int. Cl.: G08B 17/107, G01N 30/74, G01N 21/03

(54) **Anordnung zum Abschwächen auftreffenden Lichts eines Strahlenbündels**
Assembly for damping the impinging light of a beam of radiation
Agencement destiné à atténuer la lumière incidente d'un faisceau de rayons

(43) Veröffentlichungstag der Anmeldung: 06.01.2016
(73) Patentinhaber: Amrona AG, 6304 Zug (CH)
(72) Erfinder: Siemens, Andreas, 30880 Laatzen (DE)
(74) Vertreter: Rupprecht, Kay

(56) Entgegenhaltungen:
- WO-A1-01/59737
- DE-B3-102005 045 280
- US-A1- 2005 179 904

## Beschreibung

Die vorliegende Erfindung betrifft eine Anordnung zum Abschwächen auftreffenden Lichts eines Strahlenbündels.

Die Druckschrift WO 2001/59737 A1 betrifft einen Streulicht-Brandmelder mit einer LED-Lichtquelle, von welcher unpolarisiertes Licht in einen Nutzlichtbereich emittiert wird. Hinter dem Nutzlichtbereich befindet sich eine Lichtfalle zum Absorbieren auftreffenden Lichts.

Die Druckschrift US 2008/0179904 A1 betrifft eine Anordnung zur Spektroskopie von Streulichtstrahlung. Hierbei wird mit Hilfe einer Lichtquelle polarisiertes Licht auf eine Probe gestrahlt und das von der Probe gestreute Licht entsprechend detektiert.

In bestimmten technischen Einrichtungen wie beispielsweise Streulicht-Rauchmeldeeinrichtungen wird gezielt Licht in einen Nutzlichtbereich, beispielsweise in einen Streulichtbereich eingeleitet und dort eventuell auftretende Reflexionen mittels eines oder mehrerer optischen Detektoren wie beispielsweise Fotodioden und dergleichen erfasst. In Streulicht-Rauchmeldern breitet sich in der Regel nahezu monochromatisches Licht oder Infrarotstrahlung einer Laser- oder Leuchtdiode geradlinig ausgehend von der Lichtquelle in den Nutzlichtbereich aus. Wird es dort von eventuell vorhandenen Rauchpartikeln oder dergleichen gestreut, so trifft eine geringe Lichtmenge dieses gestreuten (gegebenenfalls reflektierten) Lichts auf die um den Nutzlichtbereich herum angeordneten optischen Detektoren, wodurch in diesen ein Signal erzeugt wird. Je nach Anwendungsfall kommen hierbei unterschiedliche Signalauswertungsmethoden zum Einsatz; falls eine entsprechende Bedingungen erfüllt ist, kann ein derartiger Streulicht-Rauchmelder ein Alarmsignal oder dergleichen ausgeben.

Bei diesen Anwendungsfällen ist es von großer Wichtigkeit, dass durch konstruktive Maßnahmen sichergestellt ist, dass neben dem Streulicht, welches tatsächlich an zu erkennenden in dem Nutzlichtbereich befindlichen Partikeln gestreut bzw. reflektiert wurde, möglichst wenig vagabundierendes Licht auf die optischen Detektoren trifft. Vagabundierendes Licht ist Licht, welches beispielsweise von den Innenwänden oder dergleichen des Streulicht-Raumelders reflektiert wurde. Wenn zu viel vagabundierendes Licht auf die optischen Detektoren trifft, erzeugen die optischen Detektoren ein zu hohes Hintergrundsignal, so dass das Streulicht sich kaum von diesem Hintergrundsignal abhebt und daher schwer oder gar nicht gemessen werden kann. Insbesondere bei hochsensiblen Streulicht-Raumeldern ist eine hohe Verstärkung der Streulichtsignale nötig, die bei hohen Hintergrundsignalen zu einer Übersteuerung der Verstärker führen würde.

Zur Abschwächung bzw. Absorption unerwünschten Lichts sind sogenannte Lichtfallen bekannt. Aus der Druckschrift DE 10 2005 045 280 B3 ist beispielsweise ein optischer Distanzsensor mit einer derartigen Lichtfalle bekannt, wobei die Lichtfalle in unmittelbarer Nähe der Lichtquelle angeordnet ist, um Streulicht, welches sich unmittelbar von der Lichtquelle in eine andere Richtung als die Nennrichtung des auszusendenden Strahlenbündels ausbreitet, zu absorbieren. Diese herkömmliche Lichtfalle weist einen relativ komplizierten Aufbau auf, wobei Empfangslichtstrahlen derart in der Lichtfalle reflektiert werden, dass sich diese totlaufen und nicht mehr aus der Lichtfalle herausgeführt werden. Zu diesem Zweck sieht die herkömmliche Lichtfalle vor, dass Oberflächen innerhalb der Lichtfalle aufgeraut werden oder Faltenstrukturen aufweisen.

Die aus der DE 10 2005 045 280 B3 bekannte Lichtfalle weist also einen relativ komplizierten Aufbau auf, um auftreffendes Licht wirksam zu absorbieren. Die herkömmliche Lichtfalle ist im Übrigen seitlich zu einem fotooptischen Empfänger angeordnet und dient dazu, lediglich an diesem Empfänger, d. h. an dessen Oberfläche, reflektiertes Licht abzuschwächen. Mithin ist diese herkömmliche Lichtfalle nicht dazu geeignet, bei einer Anordnung, wie sie in einem Streulicht-Rauchdetektor oder dergleichen vorliegt und bei welcher der von der Lichtquelle ausgesendete Lichtstrahl (Strahlenbündel) nicht direkt auf einem Empfängerelement geführt wird, diesen direkt auftreffenden und relativ energiestarken Lichtstrahl ausreichend zu absorbieren und somit daran zu hindern, in den Nutzlichtbereich zurückreflektiert zu werden.

Ausgehend von dieser Problemstellung liegt der vorliegenden Erfindung die Aufgabe zugrunde, eine Anordnung zum Abschwächen auftreffenden Lichts eines Strahlenbündels mit endlicher Aufweitung anzugeben, welche einen vergleichsweisen einfachen Aufbau aufweist und zur Absorption (zum Abschwächen) direkt auftreffenden Lichts einer Lichtquelle wie beispielsweise einer Laser-Lichtquelle oder dergleichen geeignet ist.

Erfindungsgemäß wird die Aufgabe gelöst durch eine Anordnung zum Abschwächen auftreffenden Lichts eines Strahlenbündels mit endlicher Aufweitung, welche die Merkmale des unabhängigen Patentanspruchs 1 aufweist.

Insbesondere wird die Aufgabe gelöst durch eine Anordnung zum Abschwächen auftreffenden Lichts eines Strahlenbündels mit endlicher Aufweitung, vorzugsweise direkt auftreffenden monochromatischen Lichts, wobei die Anordnung eine Lichtquelle zum Erzeugen eines Lichtbündels unpolarisierten Lichts, vorzugsweise unpolarisierten monochromatischen Lichts, einen Nutzlichtbereich, den das unpolarisierte Licht durchläuft und vorzugsweise ausgehend von der Lichtquelle geradlinig durchläuft, sowie eine dem Nutzlichtbereich nachgeordnete und vorzugsweise in direkter Strahlrichtung des Lichtbündels nachgeordnete Absorptionseinrichtung zum zumindest teilweisen Absorbieren auftreffenden Lichts aufweist, wobei die Absorptionseinrichtung mindestens eine in Richtung des Lichtbündels angeordnete Polarisationseinrichtung aufweist.

Durch die Verwendung mindestens einer Polarisationseinrichtung ist auf überraschend einfache Weise eine zuverlässige Abschwächung des direkt auftreffenden Lichtbündels möglich, nachdem dieses den Nutzlichtbereich unpolarisiert durchlaufen hat. Dadurch, dass Polarisationseinrichtungen kostengünstig verfügbar sind, ist es somit auf ökonomisch vorteilhafte Weise einfach möglich, das durch vagabundierendes Licht erzeugte Hintergrundsignal bei Vorrichtungen wirksam zu minimieren, welche von einer derartigen Anordnung Gebrauch machen. Dies gilt ganz besonders für den Fall, dass die Absorptionseinrichtung dem Nutzlichtbereich in direkter Strahlrichtung des Lichtbündels nachgeordnet ist, mit anderen Worten also von dem gesamten relativ starken Strahlbündel beaufschlagt wird, welches beispielsweise aus einer monochromatischen Laserlichtquelle oder aus einer nahezu monochromatischen LED-Lichtquelle stammt.

Vorteilhafte Weiterbildungen der erfindungsgemäßen Lösung sind in den abhängigen Ansprüchen angegeben.

So ist es beispielsweise vorgesehen, dass um den Nutzlichtbereich herum mindestens ein optischer Detektor zum Detektieren von Streulicht angeordnet ist. Wenn also nicht lediglich das Auftreten von Streulicht, welches negativ in den Nutzlichtbereich zurückwirkt, vermieden werden soll, sondern ganz gezielt um diesen Nutzlichtbereich herum eine optische Erkennung stattfindet, dann kann mit der erfindungsgemäßen Anordnung eine noch bessere Genauigkeit der optischen Detektion erreicht werden, was das Hintergrundsignal aufgrund von ungewollt in den Nutzlichtbereich zurückgestreuten Streulicht weiter verringert.

Gemäß einem weiteren Aspekt der Erfindung ist es vorgesehen, dass die Absorptionseinrichtung mindestens zwei in Richtung des Lichtbündels aufeinanderfolgend angeordnete Polarisationseinrichtungen aufweist. Es hat sich überraschend herausgestellt, dass durch die aufeinanderfolgende Anordnung mindestens zweier Polarisationseinrichtungen zum Absorbieren des auftreffenden Lichtbündels die Absorptionseigenschaften nochmals signifikant verbessert werden können.

In Anknüpfung an diese Weiterbildung ist es beispielsweise vorgesehen, dass die mindestens zwei Polarisationseinrichtungen einen ersten linearen Polarisationsfilter und einen zweiten linearen Polarisationsfilter aufweisen. Hierbei sind die Polarisationsrichtungen des ersten und des zweiten linearen Polarisationsfilters um 90° zueinander versetzt. Durch eine derartige Verdrehung der Polarisationsebenen der beiden linearen Polarisationsfilter, welche in Richtung des Lichtbündels aufeinanderfolgend angeordnet sind, kann die Absorptionswirkung nochmals verbessert werden.

Alternativ ist es in Anknüpfung an die vorgenannte Weiterbildung möglich, dass die mindestens zwei Polarisationseinrichtungen einen ersten zirkularen Polarisationsfilter und einen zweiten zirkularen Polarisationsfilter aufweisen. Der Polarisations-Drehsinn des ersten Polarisationsfilters in Richtung des einfallenden Lichtbündels ist hierbei gleich dem Polarisations-Drehsinn des zweiten Polarisationsfilters in Richtung des einfallenden Lichtbündels. Mit anderen Worten: Die beiden in Richtung des Lichtbündels aufeinanderfolgend angeordneten zirkularen Polarisationsfilter sind nicht gegensinnig zueinander verdreht. Im Vergleich zu den aufeinander folgend angeordneten linearen Polarisationsfiltern kann bei dieser Weiterbildung der Erfindung eine nochmals verbesserte, ausgezeichnete Absorptionswirkung erzielt werden.

Es ist jedoch ebenfalls möglich, dass auch die Polarisationsrichtung des ersten zirkularen Polarisationsfilters zu derjenigen des zweiten zirkularen Polarisationsfilters um 90° versetzt ist.

Bei den Weiterbildungen mit den zirkularen Polarisationsfiltern kann zusätzlich ein linearer Polarisationsfilter vorgesehen sein, welcher dem mindestens einen optischen Detektor zugeordnet ist. Mit anderen Worten: Direkt vor dem mindestens einen optischen Detektor ist ein linearer Polarisationsfilter angeordnet, während die zwei zirkularen Polarisationsfilter gleichen Drehsinns direkt in Richtung des Lichtbündels aufeinanderfolgend angeordnet sind und dieses Lichtbündel abschwächen, nachdem es den Nutzlichtbereich durchquert hat. Hierdurch kann das durch vagabundierendes Licht erzeugte Hintergrundsignal an dem mindestens einen optischen Detektor noch weiter reduziert werden.

Gemäß einem weiteren Aspekt der erfindungsgemäßen Lösung ist es vorgesehen, dass die mindestens eine Polarisationseinrichtung wechselbar in einer dem Nutzlichtbereich in Richtung des Lichtbündels nachgeordneten Halterungseinrichtung aufgenommen ist. Hierdurch wird die Handhabung der Absorptionseinrichtung erleichtert und vereinfacht, beispielsweise dann, wenn die Polarisationseinrichtung bzw. die Polarisationseinrichtungen ausgetauscht werden sollen. Durch eine derartige Halterung ist zudem eine einfache Nachrüstbarkeit vorhandener Vorrichtungen möglich, welche sich der erfindungsgemäßen Anordnung bedienen sollen.

Gemäß einem weiteren Aspekt der erfindungsgemäßen Lösung ist es vorgesehen, dass die Lichtquelle eine Leuchtdiode und vorzugsweise mindestens eine Linse sowie vorzugsweise mindestens eine Blende aufweist. Ein derartiges optisches System ist verhältnismäßig einfach und damit kostengünstig herzustellen und erlaubt gleichzeitig eine gezielte Beaufschlagung des Nutzlichtbereichs mit dem zu nutzenden Licht oder Infrarot- oder Ultraviolettstrahlung.

Gemäß einem weiteren Aspekt der erfindungsgemäßen Lösung ist es vorgesehen, dass der mindestens eine optische Detektor eine Fotodiode und vorzugsweise mindestens eine Linse sowie vorzugsweise mindestens eine Blende aufweist. Ebenso gilt auch bei diesem optischen System, dass es relativ kostengünstig bereitgestellt werden kann und gleichzeitig eine hohe Erkennungsgenauigkeit bietet.

Gemäß einem weiteren Aspekt der Erfindung ist es vorgesehen, dass die mindestens zwei Polarisationseinrichtungen in Richtung des Lichtbündels in einem Abstand von weniger als 5 mm und vorzugsweise von weniger als 2 mm voneinander beabstandet sind. Durch eine verhältnismäßig geringe Beabstandung der beiden Polarisationseinrichtungen voneinander in Richtung des Lichtbündels kann die Absorptionsleistung nochmals verbessert werden.

Gemäß einem weiteren Aspekt der Erfindung ist es vorgesehen, dass die mindestens eine Polarisationseinrichtung in Bezug auf die Richtung des einfallenden Lichtbündels in einem Winkel geneigt ist, wobei der Winkel zwischen dem einfallenden Lichtbündel und einer Detektorebene gebildet wird, innerhalb welcher die optische Mittelachse des mindestens einen Detektors angeordnet ist, und wobei der Winkel vorzugsweise etwa 45° beträgt. Mit anderen Worten: Die mindestens eine Polarisationseinrichtung und in bevorzugter Weise die mindestens zwei Polarisationseinrichtungen ist bzw. sind gemeinsam relativ zum einfallenden Lichtbündel verkippt, sodass gegebenenfalls nicht von der Absorptionseinrichtung absorbiertes bzw. nicht ausreichend abgeschwächtes einfallendes Licht nicht auf dem gleichen Weg zurück reflektiert wird, auf welchem es eingefallen ist. Es kann dann, wenn die Anordnung in einem Streulichtrauchmelder zum Einsatz kommt, durch die Verkippung vielmehr auf den Boden des Streulichtrauchmelders reflektiert werden. Hierdurch wird die Leistungsfähigkeit der Anordnung dahingehend gesteigert, dass unerwünschtes Streulicht in dem Nutzlichtbereich noch besser vermieden werden kann.

Die Erfindung ist auch gerichtet auf einen Streulicht-Rauchmelder mit mindestens einer Zufuhröffnung zum Zuführen von Umgebungsluft und mit einer oben beschriebenen erfindungsgemäßen Anordnung, wobei die Zufuhröffnung in einen Streulichtbereich mündet, und wobei der Streulichtbereich zumindest bereichsweise dem Nutzlichtbereich entspricht.

Nachfolgend wird eine Ausführungsform der erfindungsgemäßen Anordnung zum Abschwächen auftreffenden Lichts eines Strahlenbündels mit endlicher Aufweitung anhand einer Zeichnung näher erläutert. In den Zeichnungen zeigen:
- Fig. 1:: eine perspektivische Schnittansicht einer erfindungsgemäßen Anordnung zum Abschwächen auftreffenden Lichts gemäß einer Ausführungsform der Erfindung;
- Fig. 2:: eine schematische Draufsicht auf die Anordnung aus Fig. 1; und
- Fig. 3:: eine perspektivische Draufsicht auf die Anordnung aus den Figuren 1 und 2, wobei deren Absorptionseinrichtung zur besseren Veranschaulichung in Explosionsdarstellung dargestellt ist.

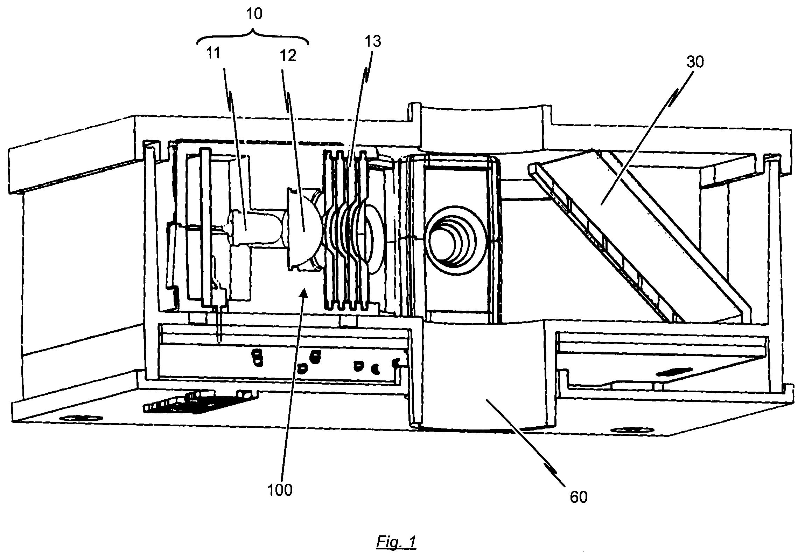

Fig. 1 zeigt eine perspektivische Schnittansicht einer erfindungsgemäßen Anordnung 100 zum Abschwächen auftreffenden Lichts eines Strahlenbündels mit endlicher Aufweitung gemäß einer Ausführungsform der Erfindung. Die Anordnung 100 kommt hierbei beispielhaft in einem Streulicht-Rauchmelder zum Einsatz, welcher in dessen unteren Bereich eine Zuführöffnung 60 zum Zuführen von Umgebungsluft in einen (in Fig. 1 nicht näher bezeichneten) Nutzlichtbereich 50 aufweist. Innerhalb des ansonsten lichtdicht ausgebildeten Gehäuses des in Fig. 1 dargestellten Streulicht-Rauchmelders ist vor dem Nutzlichtbereich 50 zum Zwecke von dessen Beaufschlagung mit Licht eine Lichtquelle vorgesehen, welche insgesamt mit 10 bezeichnet ist. Die Lichtquelle weist eine Leuchtdiode 11 und eine dieser Leuchtdiode 11 nachgeordnete Linse 12 auf, welcher wiederum eine Mehrzahl von Blenden 13 nachgeordnet sind, die das von der Leuchtdiode 11 ausgesandte Licht insgesamt bündeln und in den Nutzlichtbereich einleiten. Der Nutzlichtbereich 50 wird von dem unpolarisierten Licht durchlaufen, bei dem dargestellten Ausführungsbeispiel in Fig. 1 geradlinig. Dem Nutzlichtbereich 50 in direkter Strahlrichtung des Lichtbündels nachgeordnet ist eine Absorptionseinrichtung 30, welche dazu dient, das auftreffende Licht zumindest teilweise zu absorbieren. In dem dargestellten Ausführungsbeispiel weist die Absorptionseinrichtung 30 zwei aufeinanderfolgend angeordnete zirkulare Polarisationseinrichtungen 31, 32 auf, deren Polarisations-Drehsinn jeweils gleich ist.

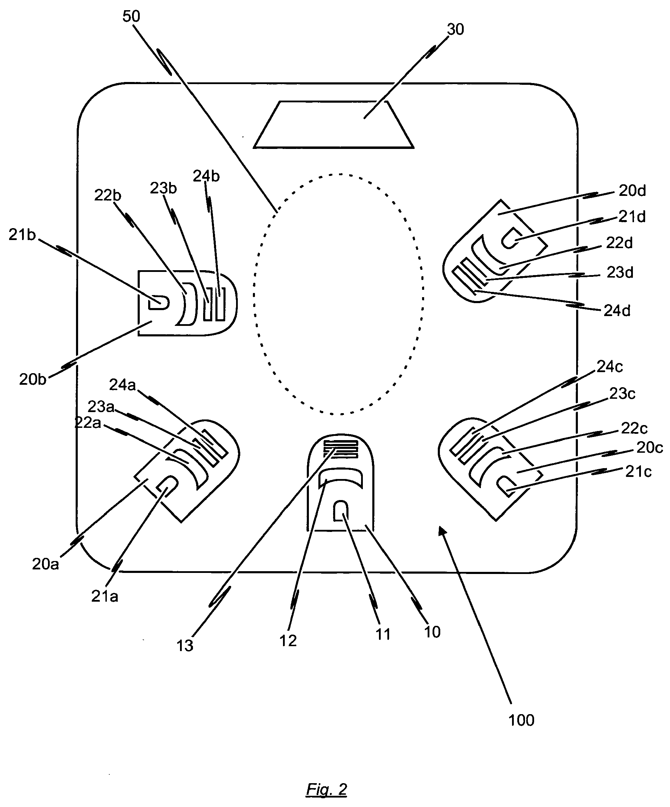

Wie aus der schematischen Draufsicht aus Fig. 2 besser hervorgeht, sind um den dort gestrichelt angedeuteten Nutzlichtbereich 50 herum mehrere optische Detektoren 20a, 20b, 20c, 20d angeordnet, welche der Klassifikation eines möglicherweise in der Anordnung 100 detektierten Streulichtsignals dienen. Die optischen Detektoren 20a, 20b, 20c, 20d weisen eine Fotodiode 21a, 21b, 21c, 21d und eine dieser Fotodiode 21a, 21b, 21c, 21d nachgeordnete Linse 22a, 22b, 22c, 22d auf, welcher wiederum eine oder mehrere Blenden 23a, 23b, 23c, 23d nachgeordnet sind, welchen jeweils eine horizontal oder vertikal ausgerichtete lineare Polarisationseinrichtung 24a, 24b, 24c, 24d, beispielsweise ein linearer Polarisationsfilter zugeordnet ist.

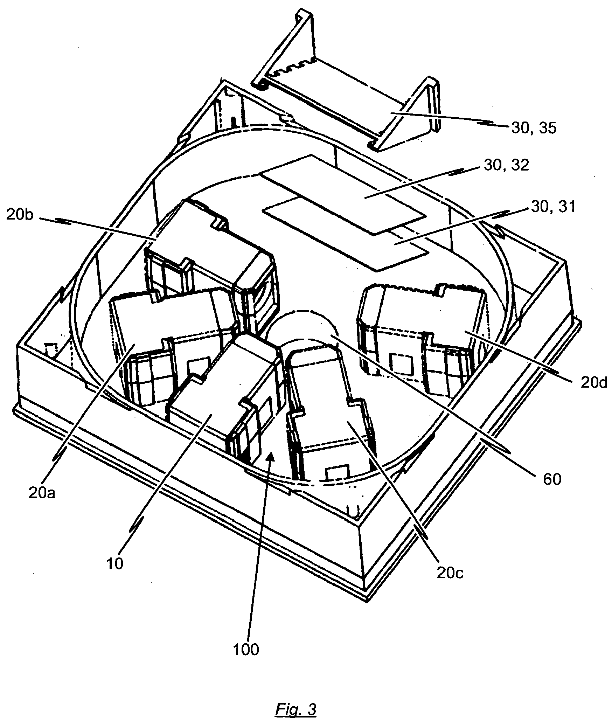

Wie aus der perspektivischen Draufsicht aus Fig. 3 besser hervorgeht, weist die dort zur besseren Veranschaulichung in Explosionsdarstellung dargestellte Absorptionseinrichtung 30 eine Halterungseinrichtung 35 auf, welche im montierten Zustand eine gegenüber dem von der Lichtquelle den ausgesandten Lichtbündel um ca. 45° in Richtung des Bodens des Streulichtrauchmelders geneigte Halterungsfläche aufweist. An dieser Halterungsfläche sind in sehr kleinem Abstand hintereinander, bei dem gezeigten Ausführungsbeispiel in einem Abstand von 2 mm hintereinander, die zirkularen Polarisationeinrichtungen 31, 32 angeordnet, welche auf sehr effektive Weise das direkt auftreffende monochromatische Licht der Leuchtdiode 11, welches durch die Linse 12 gebündelt und durch die Blenden 13 in den Nutzlichtbereich 50 geleitet wird, abschwächen, sodass dessen Intensität ausreichend klein ist, dass es nicht auf unerwünschte Weise infolge von Mehrfachreflexion oder dergleichen von den optischen Detektoren 20a, 20b, 20c, 20d erfasst wird.

Es versteht sich, dass das dargestellte Ausführungsbeispiel lediglich der besseren Erläuterung dient und nicht einschränkend aufzufassen ist. Ergänzungen und Abwandlungen der erfinderischen Idee sind dem Fachmann geläufig.

### Bezugszeichenliste

- 10: Lichtquelle
- 11: Leuchtdiode
- 12: Linse
- 13: Blenden
- 20a, 20b, 20c, 20d: optischer Detektor
- 21a, 21b, 21c, 21d: Fotodioden
- 22a, 22b, 22c, 22d: Linsen
- 23a, 23b, 23c, 23d: Blenden
- 24a, 24b, 24c, 24d: lineare Polarisationsfilter
- 30: Absorptionseinrichtung
- 31: erste Polarisationseinrichtung
- 32: zweite Polarisationseinrichtung
- 35: Halterungseinrichtung
- 50: Nutzlichtbereich
- 60: Zuführöffnung
- 100: Anordnung zum Abschwächen auftreffenden Lichts

## Patentansprüche

1. Anordnung (100) zum Abschwächen auftreffenden Lichts eines Strahlenbündels mit endlicher Aufweitung, vorzugsweise direkt auftreffenden monochromatischen Lichts, wobei die Anordnung Folgendes aufweist:
- eine Lichtquelle (10) zum Erzeugen eines Lichtbündels unpolarisierten Lichts, vorzugsweise unpolarisierten monochromatischen Lichts;
- einen Nutzlichtbereich (50), den das unpolarisierte Licht durchläuft und vorzugsweise ausgehend von der Lichtquelle (10) geradlinig durchläuft;
- eine dem Nutzlichtbereich (50) nachgeordnete und vorzugsweise in direkter Strahlrichtung des Lichtbündels nachgeordnete Absorptionseinrichtung (30) zum zumindest teilweisen Absorbieren auftreffenden Lichts,
wobei die Absorptionseinrichtung (30) mindestens eine in Richtung des Lichtbündels angeordnete Polarisationseinrichtung (31, 32) aufweist.

2. Anordnung (100) nach Anspruch 1,
wobei um den Nutzlichtbereich (50) herum mindestens ein optischer Detektor (20a, 20b, 20c, 20d) zum Detektieren von Streulicht angeordnet ist.

3. Anordnung (100) nach Anspruch 1 oder 2,
wobei die Absorptionseinrichtung (30) mindestens zwei in Richtung des Lichtbündels aufeinanderfolgend angeordnete Polarisationseinrichtungen (31, 32) aufweist.

4. Anordnung (100) nach Anspruch 3,
wobei die mindestens zwei Polarisationseinrichtungen (31, 32) einen ersten linearen Polarisationsfilter und einen zweiten linearen Polarisationsfilter aufweisen, wobei die Polarisationsrichtungen des ersten und zweiten linearen Polarisationsfilters um 90° zueinander versetzt sind.

5. Anordnung (100) nach Anspruch 3,
wobei die mindestens zwei Polarisationseinrichtungen (31, 32) einen ersten zirkularen Polarisationsfilter und einen zweiten zirkularen Polarisationsfilter aufweisen, wobei die Polarisationsrichtungen des ersten und zweiten zirkularen Polarisationsfilters um 90° zueinander versetzt sind.

6. Anordnung (100) nach Anspruch 3,
wobei die mindestens zwei Polarisationseinrichtungen (31, 32) einen ersten zirkularen Polarisationsfilter und einen zweiten zirkularen Polarisationsfilter aufweisen, wobei der Polarisations-Drehsinn des ersten Polarisationsfilters in Richtung des einfallenden Lichtbündels und der Polarisations-Drehsinn des zweiten Polarisationsfilters in Richtung des einfallenden Lichtbündels gleich sind.

7. Anordnung (100) nach Anspruch 5 oder 6,
wobei dem mindestens einen optischen Detektor (20a, 20b, 20c, 20d) ein linearer Polarisationsfilter (21a, 21b, 21c, 21d) zugeordnet ist.

8. Anordnung (100) nach einem der vorhergehenden Ansprüche, wobei die mindestens eine Polarisationseinrichtung (31, 32) wechselbar in einer dem Nutzlichtbereich in Richtung des Lichtbündels nachgeordneten Halterungseinrichtung (35) aufgenommen ist.

9. Anordnung (100) nach einem der vorhergehenden Ansprüche,
wobei die Lichtquelle eine Leuchtdiode (11) und vorzugsweise mindestens eine Linse (12) sowie vorzugsweise mindestens eine Blende (13) aufweist.

10. Anordnung (100) nach einem der Ansprüche 2 bis 9,
wobei der mindestens eine optische Detektor eine Fotodiode und vorzugsweise mindestens eine Linse sowie vorzugsweise mindestens eine Blende aufweist.

11. Anordnung (100) nach einem der Ansprüche 3 bis 10,
wobei die mindestens zwei Polarisationseinrichtungen in Richtung des Lichtbündels in einem Abstand von weniger als 5 mm, vorzugsweise weniger als 2 mm, voneinander beabstandet sind.

12. Anordnung nach einem der vorhergehenden Ansprüche,
wobei die mindestens eine Polarisationseinrichtung in Bezug auf die Richtung des einfallenden Lichtbündels in einem Winkel geneigt ist, wobei der Winkel zwischen dem einfallenden Lichtbündel und einer Detektorebene gebildet wird, innerhalb welcher die optische Mittelachse des mindestens einen Detektors angeordnet ist, und wobei der Winkel vorzugsweise etwa 45° beträgt.

13. Streulichtrauchmelder mit mindestens einer Zufuhröffnung zum Zuführen von Umgebungsluft und mit einer Anordnung nach einem der Ansprüche 1 bis 12, wobei die Zufuhröffnung in einen Streulichtbereich mündet, und
wobei der Streulichtbereich zumindest bereichsweise dem Nutzlichtbereich entspricht.

## Claims

1. An assembly for attenuating impinging light of a beam of finite expansion, preferably directly impinging monochromatic light, wherein the assembly comprises the following:
- a light source (10) for producing a beam of unpolarized light, preferably unpolarized monochromatic light;
- a useful light region (50) through which the unpolarized light passes, and preferably passes through in a straight line from the light source (10);
- an absorption device (30) arranged downstream of the useful light region (50), and preferably downstream in the direction of the direct beam radiation, for at least partly absorbing impinging light,
wherein the absorption device (30) comprises at least one polarization device (31, 32) arranged in the direction of the light beam.

2. The assembly (100) according to claim 1,
wherein at least one optical detector (20a, 20b, 20c, 20d) is arranged around the useful light region (50) for detecting scattered light.

3. The assembly (100) according to claim 1 or 2,
wherein the absorption device (30) comprises at least two polarization devices (31, 32) arranged successively in the direction of the beam of light.

4. The assembly (100) according to claim 3,
wherein the at least two polarization devices (31, 32) comprise a first linear polarizing filter and a second linear polarizing filter, wherein the polarizing directions of the first and second linear polarizing filter are offset 90° from one another.

5. The assembly (100) according to claim 3,
wherein the at least two polarization devices (31, 32) comprise a first circular polarizing filter and a second circular polarizing filter, wherein the polarizing directions of the first and second circular polarizing filter are offset 90° from one another.

6. The assembly (100) according to claim 3,
wherein the at least two polarization devices (31, 32) comprise a first circular polarizing filter and a second circular polarizing filter, wherein the rotational direction of polarization of the first polarizing filter in the direction of the impinging beam of light and the rotational direction of polarization of the second polarizing filter in the direction of the impinging beam of light is equal.

7. The assembly (100) according to claim 5 or 6,
wherein the at least one optical detector (20a, 20b, 20c, 20d) is assigned to a linear polarizing filter (21a, 21b, 21c, 21d).

8. The assembly (100) according to any one of the preceding claims,
wherein the at least one polarization device (31, 32) is exchangeably accommodated in a retaining device (35) arranged downstream the useful light region in the direction of the light beam.

9. The assembly (100) according to any one of the preceding claims,
wherein the light source comprises a light-emitting diode (11) and preferably at least one lens (12) and preferably at least one aperture (13).

10. The assembly (100) according to any one of claims 2 to 9,
wherein the at least one optical detector comprises a photodiode and preferably at least one lens and preferably at least one aperture.

11. The assembly (100) according to any one of claims 3 to 10,
wherein the at least two polarization devices are spaced apart from one another in the direction of the beam of light at a distance of less than 5 mm, preferably less than 2 mm.

12. The assembly (100) according to any one of the preceding claims,
wherein the at least one polarization device is slanted at an angle relative to the direction of the impinging beam of light, wherein the angle is formed between the impinging beam of light and a detection plane within which the central optical axis of the least one detector is arranged, and wherein the angle preferably amounts to approximately 45°.

13. A scattered light smoke detector having at least one supply opening for supplying ambient air and an assembly in accordance with any one of claims 1 to 12, wherein the feed opening empties into a scattered light region, and wherein at least part of the scattered light region corresponds to the useful light region.

## Revendications

1. Agencement (100) pour affaiblir de la lumière incidente d'un faisceau de rayons avec élargissement fini, de préférence de la lumière monochromatique directement incidente, dans lequel l'agencement comprend les éléments suivants :
- une source de lumière (10) pour engendrer un faisceau de lumière non polarisée, de préférence de lumière monochromatique non polarisée ;
- une zone de lumière utile (50) qui est traversée par la lumière non polarisée et qui s'étend en ligne droite, de préférence en partant de la source de lumière (10) ;
- un dispositif d'absorption (30), agencé à la suite de la zone de lumière utile (50) et de préférence agencé à la suite dans la direction directe du rayonnement du faisceau de lumière, pour absorber au moins partiellement la lumière incidente,
dans lequel le dispositif d'absorption (30) comprend au moins un dispositif de polarisation (31, 32) agencé dans la direction du faisceau de lumière.

2. Agencement (100) selon la revendication 1,
dans lequel au moins un détecteur optique (20a, 20b, 20c, 20d) pour détecter la lumière diffuse est agencé tout autour de la zone de lumière utile (50).

3. Agencement (100) selon la revendication 1 ou 2,
dans lequel le dispositif d'absorption (30) comprend au moins deux dispositifs de polarisation (31, 32) agencés l'un à la suite de l'autre en direction du faisceau de lumière.

4. Agencement (100) selon la revendication 3,
dans lequel lesdits au moins deux dispositifs de polarisation (31, 32) comprennent un premier filtre de polarisation linéaire et un second filtre de polarisation linéaire, tels que les directions de polarisation du premier et du second filtre de polarisation linéaire sont décalées de 90° l'une par rapport à l'autre.

5. Agencement (100) selon la revendication 3,
dans lequel lesdits au moins deux dispositifs de polarisation (31, 32) comprennent un premier filtre de polarisation circulaire et un second filtre de polarisation circulaire, tels que les directions de polarisation du premier et du second filtre de polarisation circulaire sont décalées de 90° l'une par rapport à l'autre.

6. Agencement (100) selon la revendication 3,
dans lequel lesdits au moins deux dispositifs de polarisation (31, 32) comprennent un premier filtre de polarisation circulaire et un second filtre de polarisation circulaire, tels que le sens de rotation de la polarisation du premier filtre de polarisation en direction du faisceau de lumière incident et le sens de rotation de la polarisation du second filtre de polarisation en direction du faisceau de lumière incident sont égaux.

7. Agencement (100) selon la revendication 5 ou 6,
dans lequel un filtre de polarisation linéaire (21a, 21b, 21c, 21d) est associé audit au moins un détecteur optique (20a, 20b, 20c, 20d).

8. Agencement (100) selon l'une des revendications précédentes,
dans lequel ledit au moins un dispositif de polarisation (31, 32) est reçu de manière interchangeable dans un dispositif de maintien (35) agencé à la suite de la zone de lumière utile en direction du faisceau de lumière.

9. Agencement (100) selon l'une des revendications précédentes,
dans lequel la source de lumière comprend une diode électroluminescente (11) et de préférence au moins une lentille (12) ainsi que de préférence au moins un diaphragme (13).

10. Agencement (100) selon l'une des revendications 2 à 9,
dans lequel ledit au moins un détecteur optique comprend une photodiode et de préférence au moins une lentille ainsi que de préférence au moins un diaphragme.

11. Agencement (100) selon l'une des revendications 3 à 10,
dans lequel lesdits au moins deux dispositifs de polarisation sont écartés l'un de l'autre en direction du faisceau de lumière à une distance d'au moins 5 mm, de préférence d'au moins 2 mm.

12. Agencement selon l'une des revendications précédentes,
dans lequel ledit au moins un dispositif de polarisation est incliné par rapport à la direction du faisceau de lumière incident sous un angle, ledit angle étant formé entre le faisceau de lumière incidente et un plan de détecteur à l'intérieur duquel est agencé l'axe médian optique dudit au moins un détecteur, et l'angle s'élève de préférence à environ 45°.

13. Détecteur de fumée à lumière diffuse, comprenant au moins une ouverture d'admission pour admettre de l'air environnant, et comprenant un agencement selon l'une des revendications 1 à 12, dans lequel l'ouverture d'admission débouche dans une zone de lumière diffuse, et dans lequel la zone de lumière diffuse correspond au moins localement à la zone de lumière utile.
